# EUROPÄISCHE PATENTSCHRIFT

(11) **EP 2 722 465 B1**
(45) Veröffentlichungstag und Bekanntmachung des Hinweises auf die Patenterteilung: **23.03.2016**
(21) Anmeldenummer: 13179060.2
(22) Anmeldetag: 02.08.2013
(51) Int. Cl.: F16B 37/08, E04G 17/065

(54) **Schnellspannmutter**
Quick tensioning nut
Écrou de serrage rapide

(30) Priorität: 18.10.2012 DE 102012219058
(43) Veröffentlichungstag der Anmeldung: 23.04.2014
(73) Patentinhaber: Andreas Maier GmbH & Co. KG, 70734 Fellbach (DE); Hächler AG Umwelttechnik, 5400 Baden (CH)
(72) Erfinder: Göbel, Volker, 70563 Stuttgart (DE); Zimmermann, Rainer, 73732 Esslingen (DE); Steinbach, Peter, 71642 Ludwigsburg (DE)
(74) Vertreter: Hoeger, Stellrecht & Partner Patentanwälte mbB

(56) Entgegenhaltungen:
- EP-A1- 0 953 778
- EP-A2- 1 854 941
- DE-A1- 4 024 784
- DE-A1-102006 005 998
- DE-C1- 19 703 303
- DE-U1- 29 505 507

## Beschreibung

Die vorliegende Erfindung betrifft eine Schnellspannmutter zum Anordnen an einem Gewindeelement mit einem Außengewinde, umfassend zwei oder mehr Gewindeteile, die in einer Eingriffstellung in Eingriff mit dem Außengewinde des Gewindeelements stehen, wenn die Schnellspannmutter an dem Gewindeelement angeordnet ist, und in einer Positionierstellung außer Eingriff mit dem Außengewinde des Gewindeelements stehen und in einer Längsrichtung des Gewindeelements verschiebbar sind.

Solche Schnellspannmuttern können insbesondere dafür verwendet werden, an einer als Gewindeelement dienenden Gewindestange angeordnet zu werden, um Schalungswände gegeneinander zu verspannen, deren Zwischenraum beispielsweise mit Beton aufgefüllt werden soll.

Die EP 1 854 941 A2 offenbart eine solche Schnellspannmutter, bei der die zwei Gewindeteile in einem Mutterkäfig aufgenommen und in dem Mutterkäfig gegen die elastische Rückstellkraft eines Federelements von der Eingriffstellung in die Positionierstellung verschiebbar sind.

Diese bekannte Schnellspannmutter weist einen komplizierten Aufbau mit vielen Einzelteilen auf und ist schwierig zu bedienen.

Die EP 0 953 778 A1, die DE 40 24 784 A1 und die DE 295 05 507 U1 offenbaren Schnellspannmuttern gemäß dem Oberbegriff von Anspruch 1.

Der vorliegenden Erfindung liegt die Aufgabe zugrunde, eine Schnellspannmutter der eingangs genannten Art zu schaffen, welche einfach aufgebaut und leicht zu bedienen, insbesondere leicht von der Eingriffstellung in die Positionierstellung überführbar ist.

Diese Aufgabe wird durch eine Schnellspannmutter nach Anspruch 1 gelöst.

Der erfindungsgemäßen Lösung liegt somit das Konzept zugrunde, die Gewindeteile nicht in der Längsrichtung des Gewindeelements zwischen der Eingriffstellung und der Positionierstellung zu verschieben, sondern die Gewindeteile relativ zueinander zu klappen, um die Schnellspannmutter von der Eingriffstellung in die Positionierstellung und von der Positionierstellung in die Eingriffstellung zu überführen.

Dabei ist vorzugsweise vorgesehen, dass die Gewindeteile relativ zueinander um eine quer, vorzugsweise im Wesentlichen senkrecht, zu einer Längsachse des Gewindeelements verlaufende Klappachse klappbar sind, wenn die Schnellspannmutter an dem Gewindeelement angeordnet ist.

Vorzugsweise wird der Klappwinkel, um welchen die Gewindeteile relativ zueinander geklappt werden, möglichst klein gehalten, um die für die Überführung zwischen der Eingriffstellung und der Positionierstellung erforderliche Klappbewegung in möglichst kurzer Zeit durchführen zu können.

Vorzugsweise ist vorgesehen, dass die Gewindeteile relativ zueinander um einen Klappwinkel von ungefähr 20° oder weniger, insbesondere von ungefähr 15° oder weniger, besonders bevorzugt von ungefähr 10° oder weniger, geklappt werden, um die Gewindeteile von der Eingriffstellung in die Positionierstellung und/oder von der Positionierstellung in die Eingriffstellung zu überführen.

Bei einer bevorzugten Ausgestaltung der Erfindung ist vorgesehen, dass die Gewindeteile zusammen ein Klappgelenk bilden.

Das Klappgelenk ist vorzugsweise mittels einer an nur einem der Gewindeteile angreifenden Kraft betätigbar.

Die Gewindeteile sind vorzugsweise in der Positionierstellung und/oder in der Eingriffstellung miteinander verrastet, so dass eine Rastkraft überwunden werden muss, um die Gewindeteile aus der Positionierstellung und/oder aus der Eingriffstellung in die jeweils andere Stellung zu überführen.

Ferner ist vorzugsweise vorgesehen, dass die Gewindeteile eine das Gewindeelement in der Positionierstellung und in der Eingriffstellung ringförmig umschließende Hülse bilden.

Dadurch ist es möglich, die Schnellspannmutter in der Positionierstellung über einen Endbereich des Gewindeelements hinweg längs einer Längsachse des Gewindeelements auf das Gewindeelement aufzuschieben, so dass die Schnellspannmutter bereits in der Positionierstellung von dem Gewindeelement durchsetzt wird und insbesondere gemeinsam mit dem Gewindeelement transportiert werden kann.

Ferner ist dadurch, dass die Gewindeteile bereits in der Positionierstellung der Schnellspannmutter eine das Gewindeelement ringförmig umschließende Hülse bilden, gewährleistet, dass das jeweils andere Gewindeteil nicht einfach ausweichen und sich von dem Gewindeelement entfernen kann, wenn eines der Gewindeteile mit einer Zugkraft oder einer Druckkraft beaufschlagt wird. Hierdurch wird es möglich, eine Klappbewegung der Gewindeteile relativ zueinander dadurch zu bewirken, dass auf nur eines der Gewindeteile eine Zugkraft oder eine Druckkraft ausgeübt wird.

Vorzugsweise ist die Schnellspannmutter von einer Bedienungsperson mit nur einer Hand, insbesondere mit nur einem Finger, zu bedienen, das heißt von der Positionierstellung in die Eingriffstellung und/oder von der Eingriffstellung in die Positionierstellung zu überführen.

Ferner ist vorzugsweise vorgesehen, dass die Schnellspannmutter bereits dadurch von der Positionierstellung in die Eingriffstellung und/oder von der Eingriffstellung in die Positionierstellung überführbar ist, wenn ein Werkzeug, insbesondere ein Schalhammer, nur an einem der beiden Gewindeteile der Schnellspannmutter angreift.

Bei einer bevorzugten Ausgestaltung der Erfindung ist vorgesehen, dass die Gewindeteile formschlüssig aneinander gehalten sind, und zwar vorzugsweise sowohl in der Positionierstellung als auch in der Eingriffstellung.

Ferner ist bei einer bevorzugten Ausgestaltung der Erfindung vorgesehen, dass die Gewindeteile gekrümmte Außenkonturen aufweisen, die miteinander in Eingriff stehen und relativ zueinander klappbar sind.

Bei einer besonderen Ausgestaltung der Erfindung ist vorgesehen, dass ein erstes Gewindeteil einen Klappvorsprung umfasst, der in eine Klappausnehmung des zweiten Gewindeteils eingreift.

Dabei kann vorzugsweise vorgesehen sein, dass ein zweites Gewindeteil zwei an die Klappausnehmung angrenzende Rastvorsprünge umfasst, welche den Klappvorsprung des ersten Gewindeteils hintergreifen.

Dabei greift vorzugsweise mindestens ein Rastvorsprung des zweiten Gewindeteils in eine Rastausnehmung des ersten Gewindeteils ein, wobei der betreffende Rastvorsprung in der Eingriffstellung oder in der Positionierstellung mit der Rastausnehmung verrastet ist.

Beispielsweise kann vorgesehen sein, dass ein erster Rastvorsprung des zweiten Gewindeteils in eine erste Rastausnehmung des ersten Gewindeteils eingreift, um den ersten Rastvorsprung in der Eingriffstellung mit der zugeordneten Rastausnehmung zu verrasten, und dass ein zweiter Rastvorsprung des zweiten Gewindeteils in eine zweite Rastausnehmung des ersten Gewindeteils eingreift, um den zweiten Rastvorsprung in der Positionierstellung mit der zugeordneten Rastausnehmung zu verrasten.

Um die Klappbewegung von zwei Gewindeteilen der Schnellspannmutter relativ zueinander beim Überführen in die Positionierstellung zu begrenzen und die Positionierstellung der Gewindeteile zu definieren, ist es günstig, wenn die Gewindeteile Positionier-Anschlagflächen aufweisen, die in der Positionierstellung, vorzugsweise im Wesentlichen flächig, aneinander anliegen.

Um die Klappbewegung der Gewindeteile relativ zueinander bei der Überführung in die Eingriffstellung zu begrenzen und die Eingriffstellung der Gewindeteile zu definieren, ist es von Vorteil, wenn die Gewindeteile Eingriffs-Anschlagflächen aufweisen, die in der Eingriffstellung, vorzugsweise im Wesentlichen flächig, aneinander anliegen.

Die Schnellspannmutter ist besonders einfach von der Positionierstellung in die Eingriffstellung und/oder von der Eingriffstellung in die Positionierstellung überführbar, wenn mindestens ein Gewindeteil mit einem Betätigungsarm verbunden ist, mittels welchem die Klappbewegung der Gewindeteile auslösbar ist.

Vorzugsweise sind zwei Gewindeteile mit jeweils einem solchen Betätigungsarm versehen.

Ein besonders einfacher Aufbau der erfindungsgemäßen Schnellspannmutter unter Verwendung möglichst weniger einzelnen Bauteile ergibt sich, wenn der Betätigungsarm einstückig mit dem jeweils zugeordneten Gewindeteil ausgebildet ist.

Um mittels des Betätigungsarms die Klappbewegung der Gewindeteile relativ zueinander auslösen zu können, ist es von Vorteil, wenn der Betätigungsarm mit einem Zugbereich für das Angreifen einer Zugkraft und/oder mit einem Druckbereich für das Angreifen einer Druckkraft an dem Betätigungsarm versehen ist.

Beispielsweise kann vorgesehen sein, dass die Gewindeteile durch Beaufschlagen des Betätigungsarms mit einer Druckkraft in die Eingriffstellung und/oder durch Beaufschlagen des Betätigungsarms mit einer Zugkraft in die Positionierstellung überführbar sind.

Um mittels der erfindungsgemäßen Schnellspannmutter eine Druckkraft auf ein externes Element, beispielsweise eine Schalungswand, übertragen zu können, ist erfindungsgemäß vorgesehen, dass die Schnellspannmutter eine Druckplatte umfasst.

Dabei sind erfindungsgemäß die Gewindeteile und die Druckplatte der Schnellspannmutter unverlierbar aneinander gehalten.

Bei einer besonders bevorzugten Ausführungsform der Erfindung ist vorgesehen, dass die Schnellspannmutter aus den Gewindeteilen und der Druckplatte besteht und keine weiteren Bauteile umfasst.

Dabei sind die Gewindeteile, insbesondere ein erstes Gewindeteil und ein zweites Gewindeteil, und die Druckplatte vorzugsweise als jeweils einstückige Bauteile ausgebildet.

Um die Druckplatte flächig an ein externes Element, beispielsweise eine Schalungswand, anlegen zu können, dessen Anlagefläche gegenüber einer Längsachse des Gewindeelements und/oder gegenüber einer Axialrichtung der Schnellspannmutter geneigt ist, ist es erfindungsgemäß vorgesehen, dass die Gewindeteile ballige Lagerflächen aufweisen, die mit einer Lagerfläche der Druckplatte derart zusammenwirken, dass die Gewindeteile relativ zu einer Längsachse der Druckplatte verkippbar an der Druckplatte gehalten sind.

Die Gewindeteile der Schnellspannmutter bilden in der Eingriffstellung zusammen ein Innengewinde, welches grundsätzlich beliebig ausgebildet sein kann.

Bei einer besonderen Ausgestaltung der Erfindung ist vorgesehen, dass das von den Gewindeteilen in der Eingriffstellung gebildete Innengewinde ein Dywidag-Gewinde ist. Solche Gewinde sind im Bauwesen, insbesondere für die Herstellung von Verschalungen für den Betonguss, weit verbreitet.

Alternativ hierzu kann beispielsweise auch vorgesehen sein, dass das von den Gewindeteilen in der Eingriffstellung gebildete Innengewinde ein metrisches Gewinde ist.

Die erfindungsgemäße Schnellspannmutter weist einen besonders einfachen Aufbau auf, da für die Bildung des Innengewindes und dessen Überführung von der Eingriffstellung in die Positionierstellung und von der Positionierstellung in die Eingriffstellung lediglich die beiden relativ zueinander klappbaren Gewindeteile und keine zusätzlichen Bauelemente benötigt werden.

Insbesondere benötigt die erfindungsgemäße Schnellspannmutter keinen Aufnahmekörper zur Aufnahme der Gewindeteile.

Die erfindungsgemäße Schnellspannmutter weist daher nur eine geringe Anzahl von Einzel-Bauteilen auf.

Ferner wird bei der erfindungsgemäßen Schnellspannmutter kein Federelement benötigt, um die Gewindeteile in die Eingriffstellung vorzuspannen.

Die einzelnen Bauteile der Schnellspannmutter, insbesondere die Gewindeteile und gegebenenfalls eine Druckplatte der Schnellspannmutter, können sehr robust ausgebildet sein.

Aufgrund ihres einfachen Aufbaus ist die erfindungsgemäße Schnellspannmutter wenig schmutzanfällig.

Ferner kann die erfindungsgemäße Schnellspannmutter vorzugsweise durch eine Einhandbedienung von der Positionierstellung in die Eingriffstellung und/oder von der Eingriffstellung in die Positionierstellung überführt werden.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung einer Schnellspannmutter mit zwei Gewindeteilen und einer Druckplatte, die in einer Eingriffstellung an einer Gewindestange angeordnet ist;
- Fig. 2: eine schematische Seitenansicht der Schnellspannmutter in der Eingriffstellung aus Fig. 1, mit Blick auf ein durch die Gewindeteile gebildetes Klappgelenk der Schnellspannmutter;
- Fig. 3: eine um 90° gedrehte schematische Seitenansicht der Schnellspannmutter in der Eingriffstellung, mit der Blickrichtung in Richtung des Pfeiles 3 in Fig. 2;
- Fig. 4: eine schematische Draufsicht von oben auf die Schnellspannmutter in der Eingriffstellung, mit der Blickrichtung in Richtung des Pfeiles 4 in den Fig. 2 und 3;
- Fig. 5: einen schematischen Längsschnitt durch die Schnellspannmutter in der Eingriffstellung aus den Fig. 1 bis 3, längs der Linie 5 - 5 in Fig. 4;
- Fig. 6: eine perspektivische Darstellung der Schnellspannmutter aus den Fig. 1 bis 5, die in einer Positionierstellung an der Gewindestange angeordnet ist;
- Fig. 7: eine schematische Seitenansicht der Schnellspannmutter in der Positionierstellung aus Fig. 6, mit Blick auf das Klappgelenk der Schnellspannmutter;
- Fig. 8: einen der Fig. 5 entsprechenden schematischen Längsschnitt durch die Schnellspannmutter in der Positionierstellung;
- Fig. 9: einen schematischen Längsschnitt durch zwei Schalungsbretter einer Verschalung, die von einer Gewindestange durchsetzt werden, wobei in einem Endbereich der Gewindestange eine erfindungsgemäße Schnellspannmutter und an einem entgegengesetzten Endbereich der Gewindestange eine konventionelle Spannmutter angeordnet sind; und
- Fig. 10: eine Explosionsdarstellung der Schnellspannmutter, welche die Herstellung der Schnellspannmutter illustriert.

Gleiche oder funktional äquivalente Elemente sind in allen Figuren mit denselben Bezugszeichen bezeichnet.

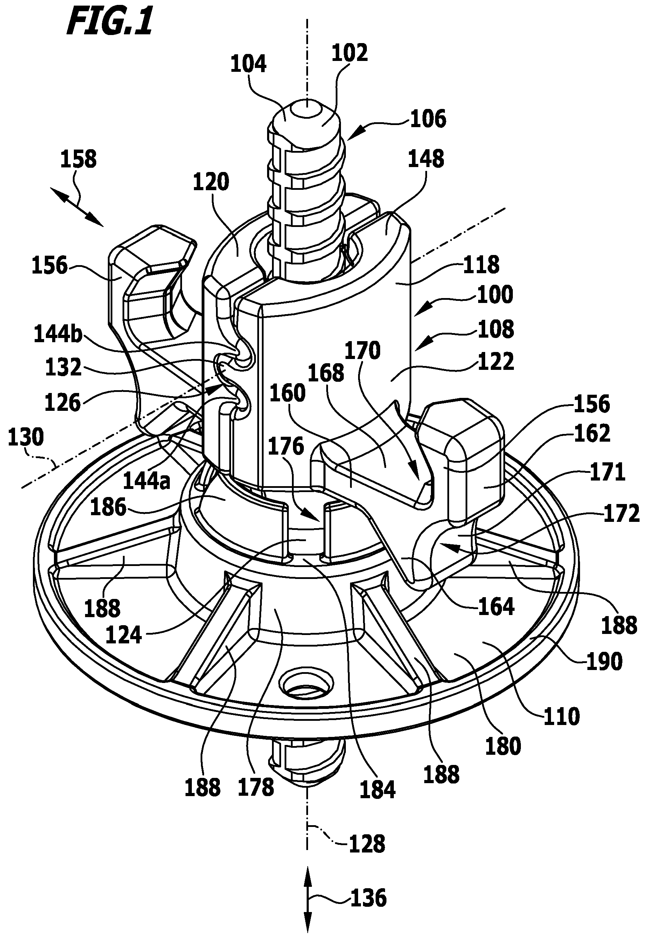

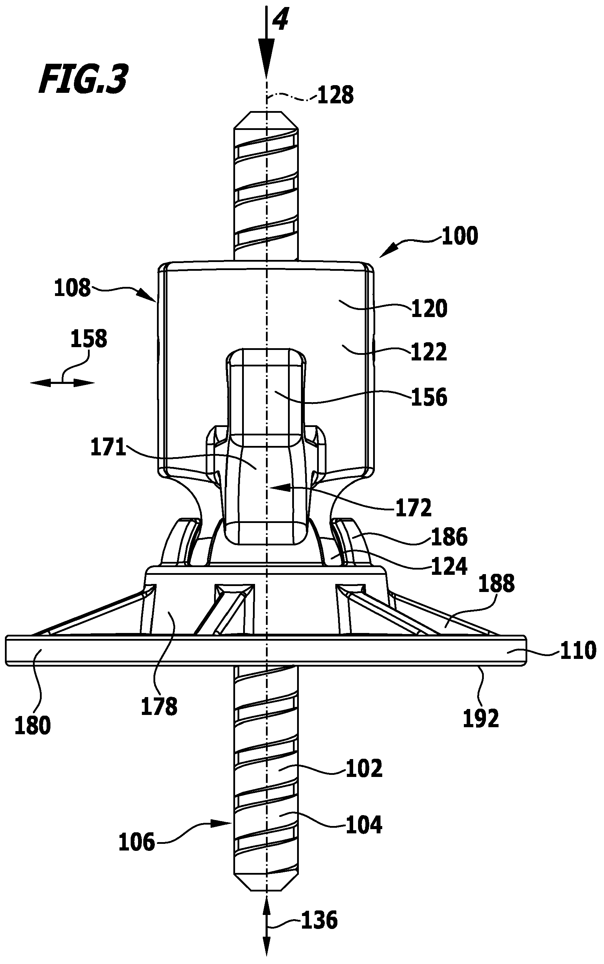

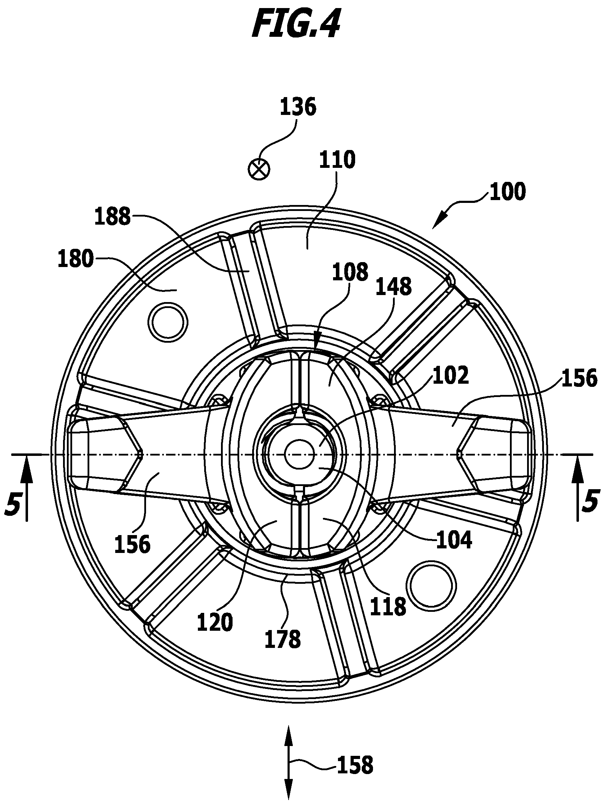

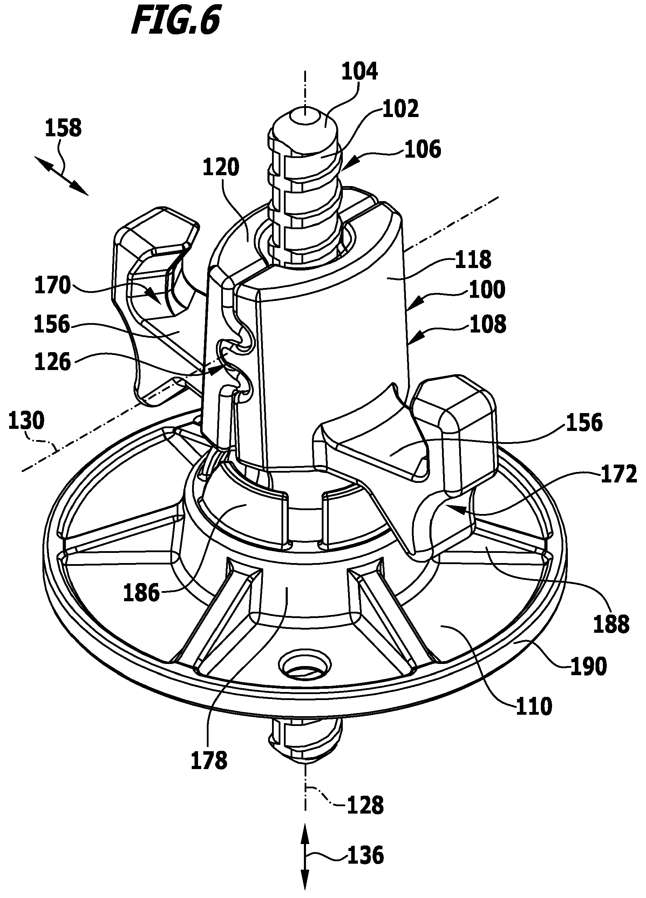

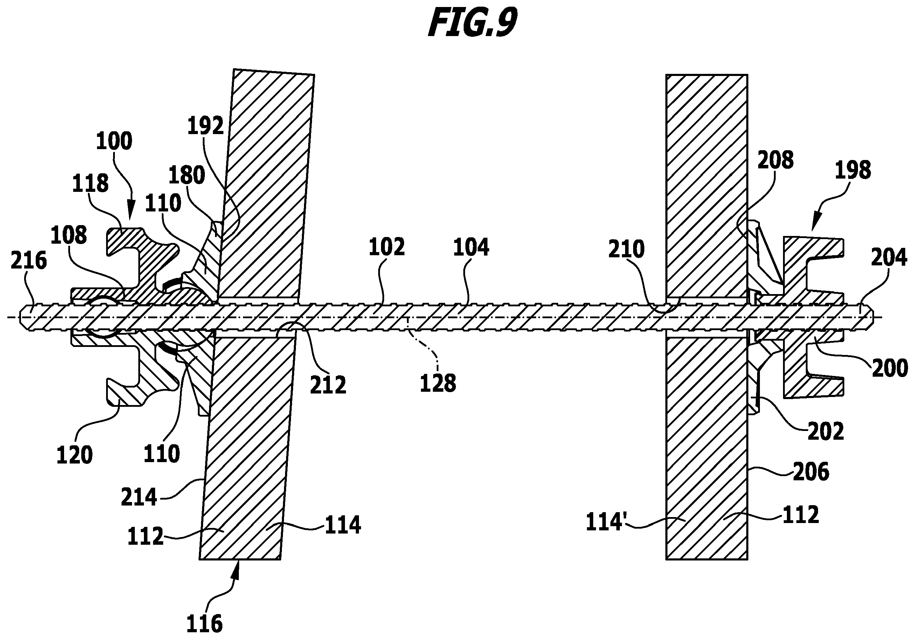

Eine in den Fig. 1 bis 5 in einer Eingriffstellung und in den Fig. 6 bis 8 in einer Positionierstellung dargestellte, als Ganzes mit 100 bezeichnete Schnellspannmutter zum Anordnen an einem Gewindeelement 102, beispielsweise in Form einer Gewindestange 104, mit einem Außengewinde 106 umfasst eine das Gewindeelement 102 in der Positionierstellung und in der Eingriffstellung ringförmig umgebende zweiteilige Hülse 108 und eine unverlierbar mit der Hülse 108 verbundene Druckplatte 110, welche zum Übertragen einer Druckkraft von der Hülse 108 auf ein einzuspannendes Element 112, beispielsweise eine Schalungswand 114 einer Verschalung 116 (siehe Fig. 9), geeignet ist.

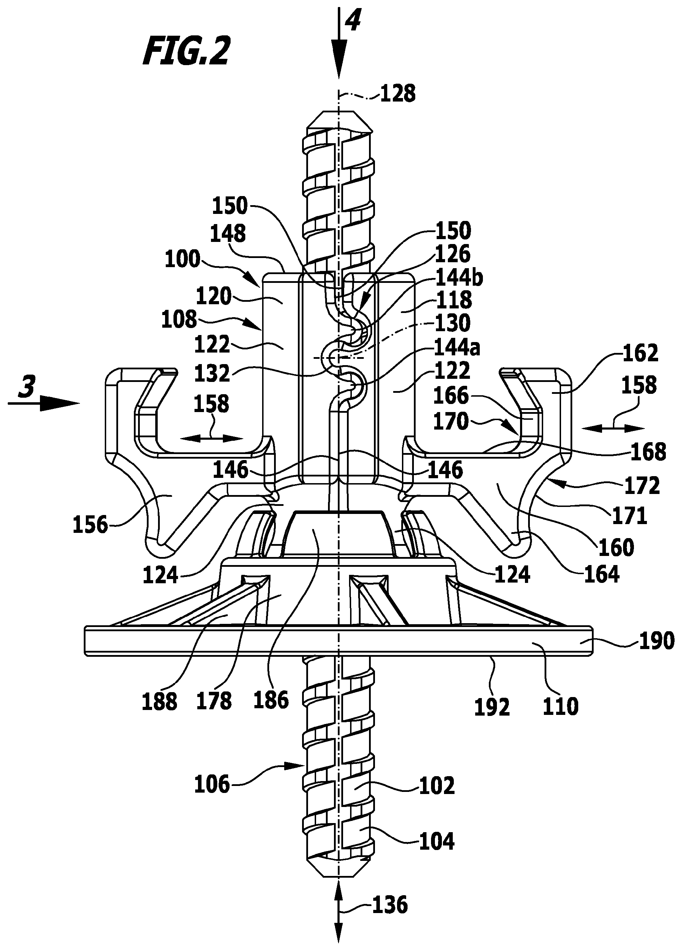

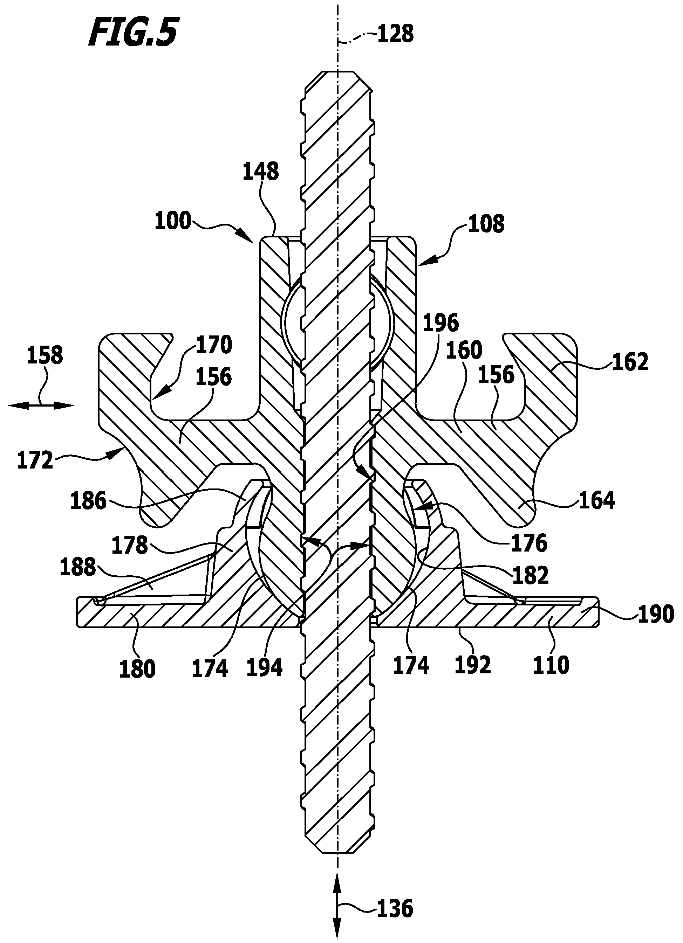

Wie am besten aus den Fig. 2 und 5 zu ersehen ist, setzt sich die Hülse 108 aus zwei formschlüssig miteinander verbundenen Hülsenhälften zusammen, welchem im Folgenden als erstes Gewindeteil 118 und zweites Gewindeteil 120 bezeichnet werden.

Jedes der Gewindeteile 118, 120 umfasst einen Klappabschnitt 122 und einen Lagerabschnitt 124.

Die Klappabschnitte 122 der beiden Gewindeteile 118 und 120 bilden zusammen ein Klappgelenk 126, mittels dessen die Gewindeteile 118 und 120 relativ zueinander um eine quer, vorzugsweise im Wesentlichen senkrecht, zur Längsachse 128 des Gewindeelements 102 verlaufende Klappachse 130 klappbar sind.

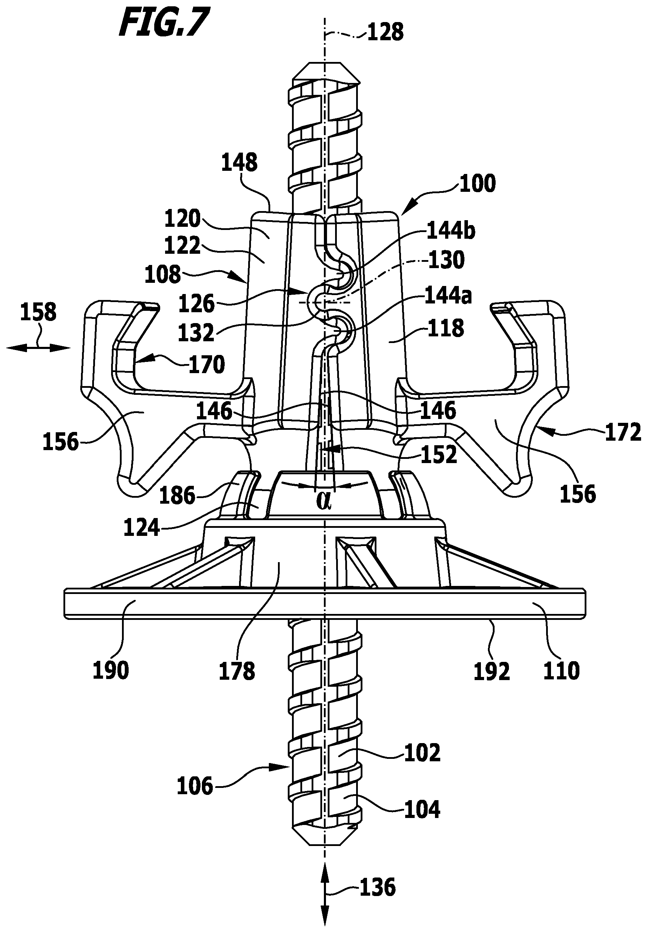

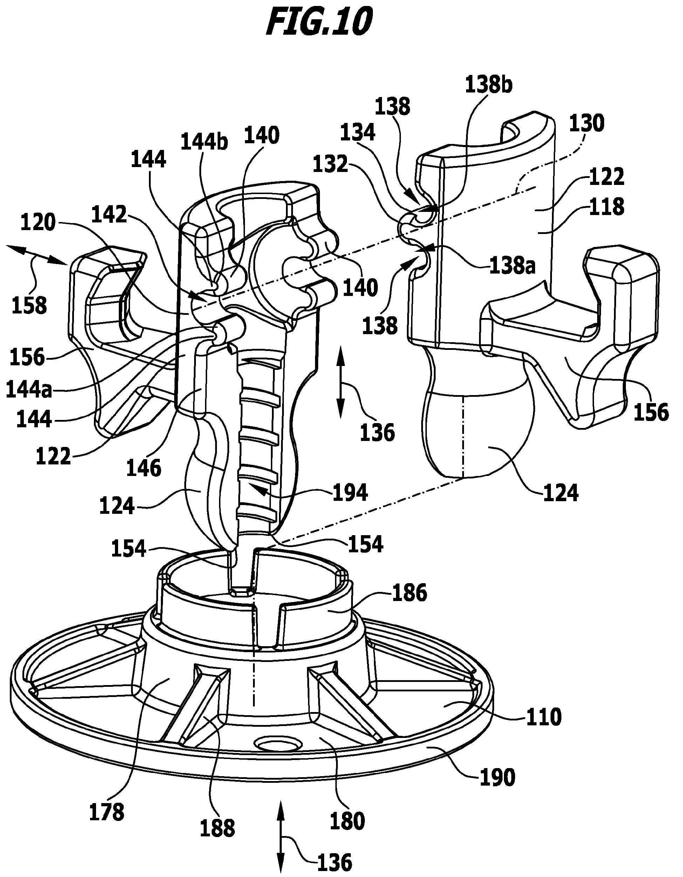

Der Aufbau des Klappgelenks ist besonders deutlich aus den Fig. 2 und 7 sowie aus Fig. 10 zu ersehen, welche eine Explosionsdarstellung der drei Einzelteile der Schnellspannmutter 100 vor deren Zusammenbau zeigt.

Die Klappachse 130 des Klappgelenks 126 verläuft durch zwei Klappvorsprünge 132, die an zwei einander gegenüberliegenden, im montierten Zustand der Schnellspannmutter 100 dem zweiten Gewindeteil 120 zugewandten Randabschnitten 134 des ersten Gewindeteils 118 ausgebildet sind.

In der Axialrichtung 136, das heißt in der in der Eingriffstellung der Schnellspannmutter 100 parallel zur Längsachse 128 des Gewindeelements 102 verlaufenden Richtung, wird jeder Klappvorsprung 132 durch jeweils eine vor beziehungsweise hinter dem Klappvorsprung 132 angeordnete Rastausnehmung 138 begrenzt.

Die beiden im montierten Zustand der Schnellspannmutter 100 dem ersten Gewindeteil 118 zugewandten Randabschnitte 140 des zweiten Gewindeteils 120 sind im Wesentlichen komplementär zu dem jeweils zugeordneten Randabschnitt 134 des ersten Gewindeteils 118 ausgebildet und umfassen jeweils eine Klappausnehmung 142, die durch in der Axialrichtung 136 vor beziehungsweise hinter der Rastausnehmung 142 angeordnete Rastvorsprünge 144 begrenzt wird.

Wie aus Fig. 2 zu ersehen ist, greifen in der Eingriffstellung der Schnellspannmutter 100 der Klappvorsprung 132 des ersten Gewindeteils 118 in die Klappausnehmung des zweiten Gewindeteils 120 und die Rastvorsprünge 144 des zweiten Gewindeteils 120 in die Rastausnehmungen 138 des ersten Gewindeteils 118 ein, wobei die Randabschnitte 134 und 140 im Bereich der vorstehend genannten Vorsprünge und Ausnehmungen so gekrümmt und komplementär zueinander ausgebildet sind, dass die beiden Gewindeteile 118 und 120 von der in Fig. 2 dargestellten Eingriffstellung um die Klappachse 130 des Klappgelenks 126 in die in Fig. 7 dargestellte Positionierstellung klappbar sind.

In der in Fig. 2 dargestellten Eingriffstellung liegen die Lagerabschnitte 124 und die sich an die Lagerabschnitte 124 anschließenden Bereiche der Klappabschnitte 122 des ersten Gewindeteils 118 und des zweiten Gewindeteils 120, welche auf der den Lagerabschnitten 124 und der Druckplatte 110 zugewandten Seite der Klappvorsprünge 132 liegen, mit Eingriffs-Anschlagflächen 146 aneinander an.

Diese Eingriffs-Anschlagflächen 146 begrenzen somit die Klappbewegung der beiden Gewindeteile 118 und 120 um die Klappachse 130 in Richtung auf die Eingriffstellung.

In der Eingriffstellung liegen auch die Rastvorsprünge 144a, welche auf der den Lagerabschnitten 124 und der Druckplatte 110 zugewandten Seite der Klappvorsprünge 132 angeordnet sind, vorzugsweise am Grund der jeweils zugeordneten Rastausnehmung 138a an.

Im Gegensatz hierzu sind in der Eingriffstellung die Rastvorsprünge 144b, die auf der den Lagerabschnitten 124 und der Druckplatte abgewandten Seite der Klappvorsprünge 132 angeordnet sind, von dem Grund der jeweils zugeordneten Rastausnehmung 138b beabstandet.

Ferner sind in der Eingriffstellung die zwischen den Rastvorsprüngen 144b und den den Lagerabschnitten 124 und der Druckplatte 110 abgewandten Enden 148 der Gewindeteile 118 und 120 angeordneten Randabschnitte 134 und 140 der beiden Gewindeteile 118 und 120, welche in diesem Bereich Positionier-Anschlagflächen 150 bilden, durch einen Spalt voneinander beabstandet.

Nach einer Klappung der beiden Gewindeteile 118 und 120 relativ zueinander um die Klappachse 130 von der in Fig. 2 dargestellten Eingriffstellung in die in Fig. 7 dargestellte Positionierstellung liegen die Positionier-Anschlagflächen 150 der beiden Gewindeteile 118 und 120 aneinander an, so dass die Positionier-Anschlagflächen 150 die Klappbewegung der Gewindeteile 118 und 120 relativ zueinander in Richtung auf die Positionierstellung begrenzen.

In der Positionierstellung liegen ferner die Rastvorsprünge 144b vorzugsweise am Grund der jeweils zugeordneten Rastausnehmungen 138b des ersten Gewindeteils 118 an, während die Rastvorsprünge 144a vom Grund der jeweils zugeordneten Rastausnehmungen 138a beabstandet sind.

Ferner sind die Eingriffs-Anschlagflächen 146 in der Positionierstellung um einen Spalt 152 voneinander beabstandet.

Der Spalt 152 erweitert sich unter einem Öffnungswinkel α zu den der Druckplatte 110 zugewandten Enden 154 der Gewindeteile 118 und 120 hin.

Dieser Winkel α entspricht dem Klappwinkel, um welchen die Gewindeteile 118 und 120 bei der Überführung von der Eingriffstellung in die Positionierstellung relativ zueinander geklappt werden.

Der Winkel α ist vorzugsweise kleiner als ungefähr 20°, insbesondere kleiner als ungefähr 15°, besonders bevorzugt kleiner als ungefähr 10°.

Die Rastvorsprünge 144a und die denselben zugeordneten Rastausnehmungen 138a sind vorzugsweise so ausgebildet, dass die Rastvorsprünge 144a und die Rastausnehmungen 138a in der Eingriffstellung der Schnellspannmutter 100 miteinander verrastet sind und eine Rastkraft überwunden werden muss, um die Rastvorsprünge 144a relativ zu den Rastausnehmungen 138a zu bewegen, wenn die Schnellspannmutter 100 aus der Eingriffstellung gelöst wird.

In entsprechender Weise sind vorzugsweise die Rastvorsprünge 144b und die denselben zugeordneten Rastausnehmungen 138b so ausgebildet, dass die Rastvorsprünge 144b und die Rastausnehmungen 138b in der Positionierstellung der Schnellspannmutter 100 miteinander verrastet sind, so dass eine Rastkraft überwunden werden muss, um die Rastvorsprünge 144b relativ zu den Rastausnehmungen 138b zu bewegen, wenn die Schnellspannmutter 100 aus der Positionierstellung gelöst wird.

An seiner dem jeweils anderen Gewindeteil 120 beziehungsweise 118 abgewandten Außenseite ist jedes der Gewindeteile 118 und 120 mit jeweils einem Betätigungsarm 156 versehen, mittels welchem die Klappbewegung der Gewindeteile 118 und 120 relativ zueinander auslösbar ist.

Jeder Betätigungsarm 156 kann einen sich im Wesentlichen in einer Radialrichtung 158 erstreckenden Radialabschnitt 160, einen sich von einem freien Ende des Radialabschnitts 160 in der Axialrichtung 136 erstreckenden Axialabschnitt 162 und einen sich auf der der Druckplatte 110 zugewandten Seite des Radialabschnitts 160 schräg zur Axialrichtung 136 und schräg zur Radialrichtung 158 erstreckenden geneigten Abschnitt 164 umfassen.

Die Radialrichtung 158 ist radial zur Axialrichtung 136 der Schnellspannmutter 100 ausgerichtet.

Der Axialabschnitt 162 des Betätigungsarms 152 erstreckt sich vorzugsweise vom Radialabschnitt 160 aus in die der Druckplatte 110 abgewandte Richtung.

Die radial innenliegende Oberfläche 166 des Axialabschnitts 162 und die dem Axialabschnitt 162 zugewandte, an die radial innenliegende Oberfläche 166 des Axialabschnitts 162 angrenzende Oberfläche 168 des Radialabschnitts 160 bilden zusammen einen Zugbereich 170 des Betätigungsarmes 156, an welchem ein Finger einer Bedienungsperson oder ein geeignetes Werkzeug, beispielsweise eine Spitze eines Schalhammers, angreifen können, um eine Zugkraft auf den Betätigungsarm 156 und somit auf das jeweils zugeordnete Gewindeteil 118 oder 120 auszuüben, welche zumindest eine in der Radialrichtung 158 wirkende Komponente aufweist und somit dazu geeignet ist, die Eingriffs-Anschlagflächen 146 der Gewindeteile 118 und 120 voneinander weg zu bewegen und die Gewindeteile 118 und 120 relativ zueinander aus der Eingriffstellung in die Positionierstellung zu klappen.

Die radial außen liegende Oberfläche 171 des geneigten Abschnitts 164 des Betätigungsarms 156 ist vorzugsweise gekrümmt ausgebildet und bildet einen Druckbereich 172 des Betätigungsarms 156, an welchem ein Finger einer Bedienungsperson oder ein geeignetes Werkzeug, beispielsweise die Spitze eines Schalhammers, angreifen kann, um eine Druckkraft auf den Betätigungsarm 156 und auf das jeweils zugeordnete Gewindeteil 118 beziehungsweise 120 auszuüben, welche zumindest eine in der Radialrichtung 158 wirkende Komponente aufweist und somit dazu geeignet ist, die Eingriffs-Anschlagflächen 146 der Gewindeteile 118 und 120 aufeinander zu zu bewegen und somit die Gewindeteile 118 und 120 relativ zueinander aus der Positionierstellung in die Eingriffstellung zu klappen.

Ferner kann eine Bedienungsperson oder ein geeignetes Werkzeug an den Betätigungsarmen 156 der Schnellspannmutter 100 angreifen, um ein Drehmoment auf die aus den Gewindeteilen 118 und 120 gebildete Hülse 108 auszuüben, durch welches die Hülse 108 um die Axialrichtung 136 der Schnellspannmutter 100 und damit um die Längsachse 128 des Gewindeelements 102 gedreht wird, wenn die Schnellspannmutter 100 an dem Gewindeelement 102 angeordnet ist und sich in der Eingriffstellung befindet.

Auf diese Weise kann die Schnellspannmutter 100 in das Außengewinde 106 des Gewindeelements 102 eingeschraubt oder aus diesem ausgeschraubt werden.

Wenn die Schnellspannmutter 100 an dem Außengewinde 106 des Gewindeelements 102 festsitzt, kann sie insbesondere durch einen Schlag mit einem Hammer auf einen der Betätigungsarme 156 in der Umfangsrichtung der Hülse 108 gelöst werden, um anschließend weiter in das Außengewinde 106 eingeschraubt oder aus dem Außengewinde 106 ausgeschraubt zu werden.

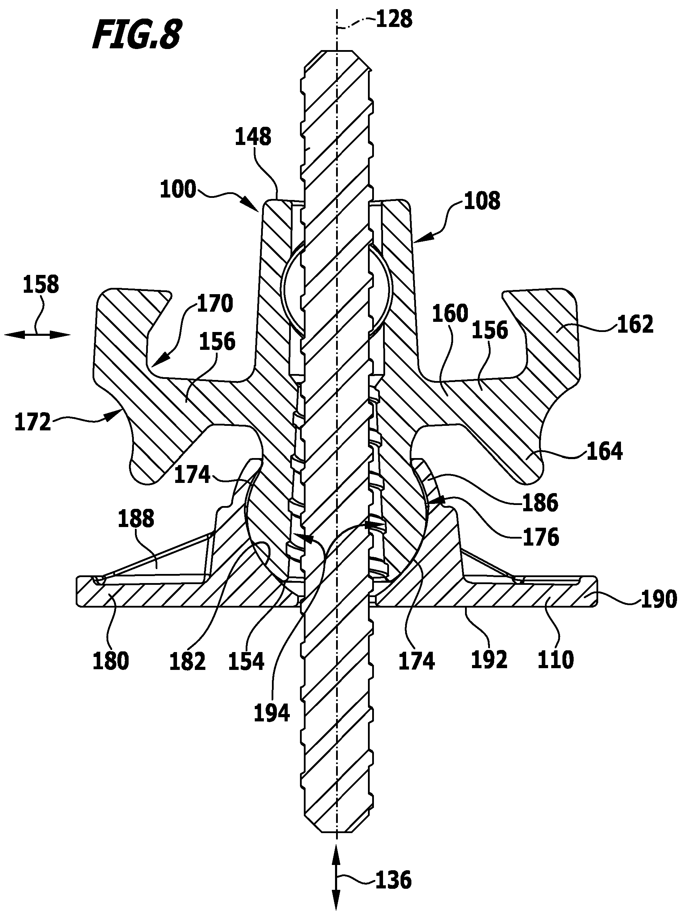

Wie am besten aus den Fig. 5 und 8 zu ersehen ist, weisen die Lagerabschnitte 124 der Gewindeteile 118 und 120 an ihrer Außenseite jeweils eine ballige Lagerfläche 174 auf.

Mit diesen Lagerflächen 174 tauchen die Lagerabschnitte 124 in eine beispielsweise schüsselförmige Aufnahme 176 der Druckplatte 110 ein, welche von einer Ringwand 178 umgeben ist, die von einem im Wesentlichen scheibenförmigen Anlageteil 176 der Druckplatte 110 getragen ist.

Die Aufnahme 176 wird von einer konkav gekrümmten Lagerfläche 182 begrenzt, welche mit den Lagerflächen 174 der Lagerabschnitte 124 der Gewindeteile 118 und 120 so zusammenwirkt, dass die Lagerabschnitte 124 und das Gewindeelement 102 innerhalb der Aufnahme 176 relativ zu der Druckplatte 110 verkippbar sind.

Wie beispielsweise aus Fig. 1 zu ersehen ist, ist die Ringwand 178 an ihrem den Gewindeteilen 118 und 120 zugewandten Rand 184 mit mehreren, beispielsweise vier, in der Umfangsrichtung der Ringwand 178 aufeinanderfolgenden und in dieser Umfangsrichtung voneinander beabstandeten Rückhaltelaschen 186 versehen. Die Rückhaltelaschen 186 sind vom Rand 184 der Ringwand 178 aus so in der Radialrichtung 158 nach innen gebogen, dass sie die Lagerabschnitte 124 der Gewindeteile 118 und 120 hintergreifen und dadurch die Lagerabschnitte 124 durch Formschluss in der Aufnahme 176 der Druckplatte 110 zurückhalten, so dass die Gewindeteile 118 und 120 sowie die Druckplatte 110 durch Formschluss unverlierbar aneinander gehalten sind.

Zur Erhöhung der mechanischen Festigkeit der Druckplatte 110 kann der Anlageteil 180 der Druckplatte 110 an seiner den Gewindeteilen 118 und 120 zugewandten Seite mit Verstrebungen 188 versehen sein, welche sich vorzugsweise in der Radialrichtung 158 erstrecken und ferner vorzugsweise die Ringwand 178 mit einem verdickten Randbereich 190 des Anlageteils 180 verbinden.

Eine den Gewindeteilen 118 und 120 abgewandte Seite des Anlageteils 180 ist vorzugsweise im Wesentlichen eben ausgebildet und dient als Anlagefläche 192 der Druckplatte 110.

Wie am besten aus den Fig. 5, 8 und 10 zu ersehen ist, sind die Gewindeteile 118 und 120 im der Druckplatte 110 zugewandten Teil ihrer Innenseite mit jeweils einem Gewindeabschnitt 194 versehen, wobei die Gewindeabschnitte 194 des ersten Gewindeteils 118 und des zweiten Gewindeteils 120 in der Eingriffstellung der Schnellspannmutter 100 zusammen ein zu dem Außengewinde 106 des Gewindeelements 102 komplementäres Innengewinde 196 bilden.

Dabei kann das Innengewinde 196 insbesondere ein für die Ankerstangen von Betonverschalungen übliches sogenanntes "Dywidag"-Gewinde oder ein metrisches Gewinde sein.

In der in Fig. 5 im Schnitt dargestellten Eingriffstellung der Schnellspannmutter 100 steht das Innengewinde 196 der Hülse 108 der Schnellspannmutter 100 in Eingriff mit dem Außengewinde 106 des Gewindeelements 102, so dass in der Eingriffstellung eine Bewegung der Schnellspannmutter 100 längs der Längsachse 128 des Gewindeelements 102 nur durch Drehen der Hülse 108 um die Axialrichtung 136 möglich ist, wodurch sich die Schnellspannmutter 100 entlang der Gewindegänge des Außengewindes 106 des Gewindeelements 102 bewegt.

Wenn die Gewindeteile 118 und 120 der Schnellspannmutter 100 in die in Fig. 8 im Schnitt dargestellte Positionierstellung geklappt worden sind, klaffen die Gewindeabschnitte 194 der Gewindeteile 118 und 120 so weit auseinander, dass der Abstand zwischen den Gewindeabschnitten 194 größer ist als der Außendurchmesser des Außengewindes 106 des Gewindeelementes 102. In der Positionierstellung kann daher die zweiteilige Hülse 108 in Richtung der Längsachse 128 relativ zu dem Gewindeelement 102 über das Außengewinde 106 des Gewindeelements 102 hinweg frei verschoben werden, so dass die Schnellspannmutter 100 an jeder beliebigen Axialposition relativ zu dem Gewindeelement 102 positioniert und an dieser neuen Axialposition durch Überführen der Gewindeteile 118 und 120 in die Eingriffstellung wieder in Eingriff mit dem Außengewinde 106 des Gewindeelements 102 gebracht werden kann.

Zur Herstellung der vorstehend beschriebenen Schnellspannmutter 100 wird wie folgt vorgegangen (siehe Fig. 10):
Das erste Gewindeteil 118, das zweite Gewindeteil 120 und die Druckplatte 110 werden als separate Teile aus einem geeigneten Ausgangsmaterial hergestellt, vorzugsweise aus einem metallischen Material, insbesondere aus einem Stahlmaterial.

Die Herstellung dieser Teile kann beispielsweise in einem Gießverfahren und/oder durch spanende Bearbeitung eines Ausgangsmaterials erfolgen.

Die Druckplatte 110 wird dabei in einem Ausgangszustand hergestellt, in welchem die Rückhaltelaschen 186 noch nicht zur Mittelachse der Druckplatte 110 hin gebogen sind, sondern sich vielmehr im Wesentlichen parallel zur Axialrichtung 136 erstrecken, um das Einführen der Lagerabschnitte 124 der Gewindeteile 118 und 120 in die Aufnahme 176 zu ermöglichen.

Das erste Gewindeteil 118 wird zur Bildung der zweiteiligen Hülse 108 so (in einer zur Klappachse 130 parallelen Richtung) seitlich auf das zweite Gewindeteil 120 aufgeschoben, dass die Klappvorsprünge 132 des ersten Gewindeteils 118 in Eingriff mit den Klappausnehmungen 142 des zweiten Gewindeteils 120 und die Rastvorsprünge 144 des zweiten Gewindeteils 120 in Eingriff mit den Rastausnehmungen 138 des ersten Gewindeteils 118 kommen.

Anschließend werden die Lagerabschnitte 124 der Gewindeteile 118 und 120, vorzugsweise in der Eingriffstellung der Gewindeteile 118 und 120, in die Aufnahme 176 der Druckplatte 110 eingebracht und in der Aufnahme 176 gesichert, indem die Rückhaltelaschen 186 so umgeformt werden, dass ihre der Ringwand 178 abgewandten freien Ränder zur Mittelachse der Druckplatte 110 hin gebogen sind und die Lagerabschnitte 124 der Gewindeteile 118 und 120 hintergreifen.

Damit sind das erste Gewindeteil 118, das zweite Gewindeteil 120 und die Druckplatte 110 durch Formschluss unverlierbar aneinander gehalten, und die Schnellspannmutter 100 ist einsatzfertig montiert.

Eine Verwendungsmöglichkeit der vorstehend beschriebenen Schnellspannmutter 100 ist schematisch in Fig. 9 dargestellt.

Bei dieser Verwendung werden zwei Schalungswände 114 und 114' einer Verschalung 116 zur Herstellung eines Wandelements aus Beton mittels einer Schnellspannmutter 100 der vorstehend beschriebenen Art und einer konventionellen Mutter 198 gegeneinander verspannt.

Die konventionelle Mutter 198 umfasst eine Gewindehülse 200, die starr mit einer Druckplatte 202 verbunden ist.

Die konventionelle Mutter 198 wird auf einen ersten Endbereich 204 eines Gewindeelements 102 in Form einer Gewindestange 104 aufgeschraubt und an einer Außenseite 206 der Schalungswand 114' so positioniert, dass die Druckplatte 202 mit ihrer Anlagefläche 208 an der Außenseite 206 der Schalungswand 114' anliegt und die Gewindestange 104 sich durch eine Durchgangsbohrung 210 in der Schalungswand 114' und durch eine Durchgangsbohrung 212 in der weiteren Schalungswand 114 hindurch erstreckt.

Dabei kann eine Außenseite 214 der Schalungswand 114 gegenüber der Außenseite 206 der Schalungswand 114' geneigt sein.

Die Schnellspannmutter 100 wird in die Positionierstellung gebracht und über den zweiten Endbereich 216 der Gewindestange 104 hinweg auf die Gewindestange 104 aufgeschoben.

Die Schnellspannmutter 100 wird in der Positionierstellung längs der Längsachse 128 der Gewindestange 104 so lange verschoben, bis die Anlagefläche 192 des Anlageteils 180 der Druckplatte 110 im Wesentlichen flächig an der Außenseite 214 der Schalungswand 114 anliegt.

Dabei kann die Druckplatte 110 relativ zu den Gewindeteilen 118 und 120 verkippt werden, wie dies vorstehend beschrieben worden ist, um die Neigung der Außenseite 214 der Schalungswand 114 gegenüber einer zur Längsachse 128 der Gewindestange 104 senkrechten Ebene zu kompensieren.

Wenn diese gewünschte Position der Schnellspannmutter 100 längs der Längsachse 128 der Gewindestange 104 erreicht ist, wird die Schnellspannmutter 100 von der Positionierstellung in die Eingriffstellung überführt, indem beispielsweise eine Bedienungsperson mit der Spitze eines Schalhammers an dem Druckbereich 172 eines Betätigungsarms 156 eines der Gewindeteile 118 oder 120 angreift und durch Ausüben einer Druckkraft die Gewindeteile 118 und 120 relativ zueinander um die Klappachse 130 klappt, so dass die Gewindeabschnitte 194 der Gewindeteile 118 und 120 in Eingriff mit dem Außengewinde 106 der Gewindestange 104 kommen.

Die Überführung der Schnellspannmutter 100 von der Positionierstellung in die Eingriffstellung ist somit durch eine Einhandbedienung möglich.

Da die aus den Gewindeteilen 118 und 120 gebildete Hülse 108 bereits in der Positionierstellung die Gewindestange 104 ringförmig umgibt, kann das jeweils andere Gewindeteil 120 beziehungsweise 118 einer Translationsbewegung des mit einer Druckkraft beaufschlagten Gewindeteils 118 beziehungsweise 120 in der Radialrichtung 158 nicht folgen, so dass die Ausübung der Druckkraft stattdessen eine Klappbewegung des Klappgelenks 126 auslöst.

Nachdem in der Eingriffstellung der Schnellspannmutter 100 das aus den Gewindeabschnitten 194 gebildete Innengewinde 196, welches zu dem Außengewinde 106 der Gewindestange 104 komplementär ist, in Eingriff mit dem Außengewinde 106 der Gewindestange 104 steht, kann nunmehr die Schnellspannmutter 100 gegen die Schalungswand 114 angezogen werden, indem die Bedienungsperson auf einen der Betätigungsarme 156 oder auf beide Betätigungsarme 156 der Gewindeteile 118 und 120 ein Drehmoment ausübt, durch welches die Schnellspannmutter 100 weiter in das Außengewinde 106 des Gewindeelements 102 eingeschraubt wird.

Ein solches Drehmoment kann insbesondere dadurch ausgeübt werden, dass die Bedienungsperson mit einem geeigneten Werkzeug, beispielsweise mit einem Schalhammer, in der Umfangsrichtung der Hülse 108 auf einen der Betätigungsarme 156 schlägt.

Durch das Anziehen der Schnellspannmutter 100 wird eine Druckkraft erzeugt, welche von den Lagerabschnitten 124 der Gewindeteile 118 und 120 auf die Druckplatte 110 und von dort auf die anliegende Schalungswand 114 übertragen wird.

Zum Entfernen der Schnellspannmutter 100 von der Gewindestange 104 werden die Lagerflächen 174 der Gewindeteile 118 und 120 von der Lagerfläche 182 der Aufnahme 176 der Druckplatte 110 gelöst, indem über einen Betätigungsarm 156 oder über beide Betätigungsarme 156 ein Drehmoment auf die Hülse 108 ausgeübt wird, durch welches sich die Hülse 108 in der Ausschraubrichtung bewegt.

Anschließend wird die Schnellspannmutter von der Eingriffstellung in die Positionierstellung überführt, indem auf den Zugbereich 170 eines der Betätigungsarme 156 eine Zugkraft ausgeübt wird, beispielsweise indem eine Bedienungsperson mit der Spitze eines Schalhammers an dem Zugbereich 170 zieht.

Anschließend kann die außer Eingriff mit dem Außengewinde 106 der Gewindestange 104 stehende Schnellspannmutter 100 in der Positionierstellung längs der Längsachse 128 der Gewindestange 104 beliebig verschoben und über den zweiten Endbereich 216 hinweg von der Gewindestange 104 abgenommen werden.

## Patentansprüche

1. Schnellspannmutter zum Anordnen an einem Gewindeelement (102) mit einem Außengewinde (106), wobei die Schnellspannmutter (100) mindestens zwei Gewindeteile (118, 120) umfasst, die in einer Eingriffstellung in Eingriff mit dem Außengewinde (106) des Gewindeelements (102) stehen, wenn die Schnellspannmutter (100) an dem Gewindeelement (102) angeordnet ist, und in einer Positionierstellung außer Eingriff mit dem Außengewinde (106) des Gewindeelements (102) stehen und in einer Längsrichtung des Gewindeelements (102) verschiebbar sind,
wobei die Gewindeteile (118, 120) durch eine Klappbewegung relativ zueinander von der Eingriffstellung in die Positionierstellung und von der Positionierstellung in die Eingriffstellung überführbar sind,
wobei die Schnellspannmutter (100) eine Druckplatte (110) umfasst, **dadurch gekennzeichnet**, das die Gewindeteile (118, 120) Lagerabschnitte (124) mit balligen Lagerflächen (174) aufweisen, mit denen die Lagerabschnitte (124) in eine Aufnahme (176) der Druckplatte (110) eintauchen und die mit einer Lagerfläche (182) der Druckplatte (110) derart zusammenwirken, dass die Gewindeteile (118, 120) relativ zu einer Längsachse der Druckplatte (110) verkippbar an der Druckplatte (110) gehalten sind und die Gewindeteile (118, 120) und die Druckplatte (110) unverlierbar aneinander gehalten sind.

2. Schnellspannmutter nach Anspruch 1, **dadurch gekennzeichnet, dass** die Gewindeteile (118, 120) relativ zueinander um eine quer zu einer Längsachse (128) des Gewindeelements (102) verlaufende Klappachse (130) klappbar sind.

3. Schnellspannmutter nach einem der Ansprüche 1 oder 2, **dadurch gekennzeichnet, dass** die Gewindeteile (118, 120) zusammen ein Klappgelenk (126) bilden.

4. Schnellspannmutter nach einem der Ansprüche 1 bis 3, **dadurch gekennzeichnet, dass** die Gewindeteile (118, 120) in der Positionierstellung miteinander verrastet sind.

5. Schnellspannmutter nach einem der Ansprüche 1 bis 4, **dadurch gekennzeichnet, dass** die Gewindeteile (118, 120) eine das Gewindeelement (102) in der Positionierstellung und in der Eingriffstellung ringförmig umschließende Hülse (108) bilden.

6. Schnellspannmutter nach einem der Ansprüche 1 bis 5, **dadurch gekennzeichnet, dass** die Gewindeteile (118, 120) in der Positionierstellung formschlüssig aneinander gehalten sind.

7. Schnellspannmutter nach einem der Ansprüche 1 bis 6, **dadurch gekennzeichnet, dass** die Gewindeteile (118, 120) gekrümmte Außenkonturen aufweisen, die miteinander in Eingriff stehen und relativ zueinander klappbar sind.

8. Schnellspannmutter nach einem der Ansprüche 1 bis 7, **dadurch gekennzeichnet, dass** die Gewindeteile (118, 120) ein erstes Gewindeteil (118) und ein zweites Gewindeteil (120) umfassen, wobei das erste Gewindeteil (118) einen Klappvorsprung (132) umfasst, der in eine Klappausnehmung (142) des zweiten Gewindeteils (120) eingreift.

9. Schnellspannmutter nach Anspruch 8, **dadurch gekennzeichnet, dass** das zweite Gewindeteil (120) zwei an die Klappausnehmung (142) angrenzende Rastvorsprünge (144) umfasst, welche den Klappvorsprung (132) des ersten Gewindeteils (118) hintergreifen.

10. Schnellspannmutter nach Anspruch 9, **dadurch gekennzeichnet, dass** mindestens ein Rastvorsprung (144) des zweiten Gewindeteils (120) in eine Rastausnehmung (138) des ersten Gewindeteils (118) eingreift, wobei der Rastvorsprung (144) in der Eingriffstellung oder in der Positionierstellung mit der Rastausnehmung (138) verrastet ist.

11. Schnellspannmutter nach einem der Ansprüche 1 bis 10, **dadurch gekennzeichnet, dass** die Gewindeteile (118, 120) Positionier-Anschlagflächen (150) aufweisen, die in der Positionierstellung aneinander anliegen.

12. Schnellspannmutter nach einem der Ansprüche 1 bis 11, **dadurch gekennzeichnet, dass** die Gewindeteile (118, 120) Eingriffs-Anschlagflächen (146) aufweisen, die in der Eingriffstellung aneinander anliegen.

13. Schnellspannmutter nach einem der Ansprüche 1 bis 12, **dadurch gekennzeichnet, dass** mindestens ein Gewindeteil (118, 120) mit einem Betätigungsarm (156) verbunden ist, mittels welchem die Klappbewegung der Gewindeteile (118, 120) auslösbar ist.

14. Schnellspannmutter nach Anspruch 13, **dadurch gekennzeichnet, dass** der Betätigungsarm (156) einstückig mit dem jeweils zugeordneten Gewindeteil (118, 120) ausgebildet ist.

15. Schnellspannmutter nach einem der Ansprüche 13 oder 14, **dadurch gekennzeichnet, dass** der Betätigungsarm (156) mit einem Zugbereich (170) für das Angreifen einer Zugkraft und/oder mit einem Druckbereich (172) für das Angreifen einer Druckkraft an dem Betätigungsarm (156) versehen ist.

16. Schnellspannmutter nach einem der Ansprüche 1 bis 15, **dadurch gekennzeichnet, dass** die Gewindeteile (118, 120) in der Eingriffstellung ein Innengewinde (196) bilden, das ein Dywidag-Gewinde oder ein metrisches Gewinde ist.

## Claims

1. A quick-clamping nut for location on a threaded element (102) with an external thread (106), wherein the quick-clamping nut (100) comprises at least two threaded parts (118, 120), which in an engagement position are in engagement with the external thread (106) of the threaded element (102) when the quick-clamping nut (100) is arranged on the threaded element (102), and in a positioning position are out of engagement with the external thread (106) of the threaded element (102) and are displaceable in a longitudinal direction of the threaded element (102),
wherein the threaded parts (118, 120) are transferable by a tipping movement relative to each other from the engagement position into the positioning position and from the positioning position into the engagement position.
wherein
the quick-clamping nut (100) comprises a pressure plate (110), **characterised in that**
the threaded parts (118, 120) have bearing sections (124) with convex bearing faces (174) with which the bearing sections (124) extend into a seating (176) of the pressure plate (110) and which co-operate with a bearing face (182) of the pressure plate (110) such that the threaded parts (118, 120) are held on the pressure plate (110) to be tiltable relative to a longitudinal axis of the pressure plate (110) and the threaded parts (118, 120) and the pressure plate (110) are held together in a captive manner.

2. A quick-clamping nut according to claim 1, **characterised in that** the threaded parts (118,120) are tippable relative to each other about a tipping axis (130) extending transversely of a longitudinal axis (128) of the threaded element.

3. A quick-clamping nut according to either of claim 1 or 2, **characterised in that** the threaded parts (118, 120) together form a tipping joint (126).

4. A quick-clamping nut according to any of claims 1 to 3, **characterised in that** the threaded parts (118, 120) are latched to each other in the positioning position.

5. A quick-clamping nut according to any of claims 1 to 4, **characterised in that** the threaded parts (118, 120) form an annular sleeve (108) surrounding the threaded element (102) in the positioning position and in the engagement position.

6. A quick-clamping nut according to any of claims 1 to 5, **characterised in that** the threaded parts (118, 120) are held together in positively-locking manner in the positioning position.

7. A quick-clamping nut according to any of claims 1 to 6, **characterised in that** the threaded parts (118, 120) have curved outer contours which are in engagement with each other and are tippable relative to each other.

8. A quick-clamping nut according to any of claims 1 to 7, **characterised in that** the threaded parts (118, 120) comprise a first threaded part (118) and a second threaded part (120), wherein the first threaded part (118) comprises a tipping projection (132) which engages in a tipping recess (142) of the second threaded part (120).

9. A quick-clamping nut according to claims 8, **characterised in that** the second threaded part (120) comprises two latching projections (144) adjacent to the tipping recess (142), the projections engaging behind the tipping projection (132) of the first threaded part (118).

10. A quick-clamping nut according to claim 9, **characterised in that** at least one latching projection (144) of the second threaded part (120) engages in a latching recess (138) of the first threaded part (118), wherein the latching projection (144) is latched with the latching recess (138) in the engagement position or in the positioning position.

11. A quick-clamping nut according to any of claims 1 to 10, **characterised in that** the threaded parts (118, 120) have positioning-contact-faces (150) which abut each other in the positioning position.

12. A quick-clamping nut according to any of claim 1 to 11, **characterised in that** the threaded parts (118, 120) have engagement-contact-faces (140) which abut each other in the engagement position.

13. A quick-clamping nut according to any of claims 1 to 12, **characterised in that** at least one threaded part (118, 120) is connected to an actuating arm (156) by means of which the tipping movement of the threaded parts is actuable.

14. A quick-clamping nut according to claim 13, characterised is that the actuating arm (156) is formed in one piece with the respectively associated threaded part (118, 120).

15. A quick-clamping nut according to claim 13 or 14, **characterised in that** the actuating arm (156) is provided with a pulling region (170) for the application of a pulling force and/or with a pushing region (172) for the application of a pushing force on the actuating arm (156).

16. A quick-clamping nut according to any of claims 1 to 15, **characterised in that** in the engagement position the threaded parts (118, 120) form an internal thread (196) which is a Dywidag thread or a metric thread.

## Revendications

1. Écrou de serrage rapide à monter sur un élément fileté (102) présentant un filet extérieur (106), où ledit écrou de serrage rapide (100) comprend au moins deux parties filetées (118, 120) en prise avec le filet extérieur (106) de l'élément fileté (102) dans une position de serrage, quand l'écrou de serrage rapide (100) est disposé sur l'élément fileté (102), et hors de prise avec le filet extérieur (106) de l'élément fileté (102) dans une position de mise en place, et déplaçables dans le sens de la longueur de l'élément fileté (102),
où les parties filetées (118, 120) peuvent être passées de la position de serrage à la position de mise en place et de la position de mise en place à la position de serrage, par mouvement de rabattement l'une par rapport à l'autre,
où ledit écrou de serrage rapide (100) comprend un plateau de pression (110), **caractérisé en ce que** les parties filetées (118, 120) présentent des segments de palier (124) avec des surfaces d'appui bombées (174) par lesquelles les segments de palier (124) plongent dans un logement (176) du plateau de pression (110) et qui coopèrent avec une surface d'appui (182) du plateau de pression (110) de telle manière que les parties filetées (118, 120) sont maintenues contre le plateau de pression (110) de manière pivotante par rapport à un axe longitudinal du plateau de pression (110) et que les parties filetées (118, 120) et le plateau de pression (110) sont maintenus de manière imperdable les unes contre l'autre.

2. Écrou de serrage rapide selon la revendication 1, **caractérisé en ce que** les parties filetées (118, 120) sont rabattables l'une par rapport à l'autre autour d'un axe de rabattement (130) s'étendant transversalement à un axe longitudinal (128) de l'élément fileté (102).

3. Écrou de serrage rapide selon la revendication 1 ou 2, **caractérisé en ce que** les parties filetées (118, 120) forment ensemble une articulation rabattable (126).

4. Écrou de serrage rapide selon l'une des revendications 1 à 3, **caractérisé en ce que** les parties filetées (118, 120) sont enclenchées l'une dans l'autre en position de mise en place.

5. Écrou de serrage rapide selon l'une des revendications 1 à 4, **caractérisé en ce que** les parties filetées (118, 120) forment un manchon (108) entourant annulairement l'élément fileté (102) en position de mise en place et en position de serrage.

6. Écrou de serrage rapide selon l'une des revendications 1 à 5, **caractérisé en ce que** les parties filetées (118, 120) sont maintenues l'une contre l'autre par engagement positif en position de mise en place.

7. Écrou de serrage rapide selon l'une des revendications 1 à 6, **caractérisé en ce que** les parties filetées (118, 120) présentent des contours extérieurs incurvés en prise l'un avec l'autre et rabattables l'un par rapport à l'autre.

8. Écrou de serrage rapide selon l'une des revendications 1 à 7, **caractérisé en ce que** les parties filetées (118, 120) comprennent une première partie filetée (118) et une deuxième partie filetée (120), la première partie filetée (118) présentant une saillie de rabattement (132) qui s'engage dans un évidement de rabattement (142) de la deuxième partie filetée (120).

9. Écrou de serrage rapide selon la revendication 8, **caractérisé en ce que** la deuxième partie filetée (120) comprend deux saillies de rabattement (144) adjacentes à l'évidement de rabattement (142), lesquelles enserrent la saillie de rabattement (132) de la première partie filetée (118).

10. Écrou de serrage rapide selon la revendication 9, **caractérisé en ce qu'**au moins une saillie d'enclenchement (144) de la deuxième partie filetée (120) s'engage dans un évidement d'enclenchement (138) de la première partie filetée (118), la saillie d'enclenchement (144) étant enclenchée avec l'évidement d'enclenchement (138) en position de serrage ou en position de mise en place.

11. Écrou de serrage rapide selon l'une des revendications 1 à 10, **caractérisé en ce que** les parties filetées (118, 120) présentent des surfaces de butée de positionnement (150) appliquées l'une contre l'autre en position de mise en place.

12. Écrou de serrage rapide selon l'une des revendications 1 à 11, **caractérisé en ce que** les parties filetées (118, 120) présentent des surfaces de butée d'engrènement (146) appliquées l'une contre l'autre en position de serrage.

13. Écrou de serrage rapide selon l'une des revendications 1 à 12, **caractérisé en ce qu'**au moins une partie filetée (118, 120) est raccordée à un bras d'actionnement (156) permettant de déclencher le mouvement de rabattement des parties filetées (118, 120).

14. Écrou de serrage rapide selon la revendication 13, **caractérisé en ce que** le bras d'actionnement (156) est formé d'un seul tenant avec la partie filetée (118, 120) correspondante.

15. Écrou de serrage rapide selon l'une des revendications 13 ou 14, **caractérisé en ce que** le bras d'actionnement (156) est pourvu d'une zone de traction (170) pour l'application d'une force de traction et/ou d'une zone de pression (172) pour l'application d'une force de pression sur le bras d'actionnement (156).

16. Écrou de serrage rapide selon l'une des revendications 1 à 15, **caractérisé en ce que** les parties filetées (118, 120) forment un filet intérieur (196) en position de serrage, lequel est un filet Dywidag ou un filet métrique.
